# EUROPEAN PATENT APPLICATION

(11) **EP 2 466 435 A1**
(43) Date of publication of application: **20.06.2012**
(21) Application number: 10194700.0
(22) Date of filing: 13.12.2010
(51) Int. Cl.: G06F 3/048, H04M 1/725

(54) **Portable electronic device including keyboard and touch-sensitive display for second plurality of characters.**

(71) Applicant: Research In Motion Limited, Waterloo, ON N2L 3W8 (CA)
(72) Inventor: Griffin, Jason, Tyler, Waterloo Ontario N2L 3W8 (CA)
(74) Representative: MERH-IP Matias Erny Reichl Hoffmann

(57) **Abstract**

A portable electronic device includes a body having a front face, a touch-sensitive display exposed at the front face of the body, a keyboard at the front face and having keys associated with a first plurality of characters excluding numerical characters such that keys of the keyboard are associated with a respective one of a function and a plurality of the alphabetical characters, a memory, and a processor. The processor is coupled to the touch-sensitive display, the keyboard, and the memory to display a second plurality of characters utilizing the touch-sensitive display in response to receipt of an input to display the second plurality of characters.

## Description

### FI ELD OF TECHNOLOGY

The present disclosure relates to portable electronic devices including touch-sensitive displays and the control of such portable electronic devices.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed.

Improvements in electronic devices with touch-sensitive displays are desirable.

### SUMMARY

According to one aspect, a portable electronic device includes a body having a front face, a touch-sensitive display exposed at the front face of the body, a keyboard at the front face and having keys associated with a first plurality of characters excluding numerical characters such that keys of the keyboard are associated with a respective one of a function and a plurality of the alphabetical characters, a memory, and a processor. The processor is coupled to the touch-sensitive display, the keyboard, and the memory to display a second plurality of characters utilizing the touch-sensitive display in response to receipt of an input to display the second plurality of characters.

### BRIEF DESCRIPTION OF THE DRAWINGS

FIG. 1 is a simplified block diagram of one example of a portable electronic device in accordance with the present disclosure;

FIG. 2 is a front view of an example of a portable electronic device in accordance with the present disclosure;

FIG. 3A is a flowchart illustrating an example of a method of controlling a portable electronic device in accordance with the present disclosure;

FIG. 3B is a flowchart illustrating an example of a method of disambiguation and prediction;

FIG. 4 and FIG. 5 illustrate examples of the portable electronic device of FIG. 2 receiving an input and displaying further characters; and

FIG. 6, FIG. 7, FIG. 8 and FIG. 9 illustrate further examples portable electronic devices in accordance with the present disclosure.

### DETAILED DESCRIPTION

The following describes a portable electronic device that includes a body having a front face, a touch-sensitive display exposed at the front face of the body, a keyboard at the front face and having keys associated with a first plurality of characters excluding numerical characters such that keys of the keyboard are associated with a respective one of a function and a plurality of the alphabetical characters, a memory, and a processor. The processor is coupled to the touch-sensitive display, the keyboard, and the memory to display a second plurality of characters utilizing the touch-sensitive display in response to receipt of an input to display the second plurality of characters.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

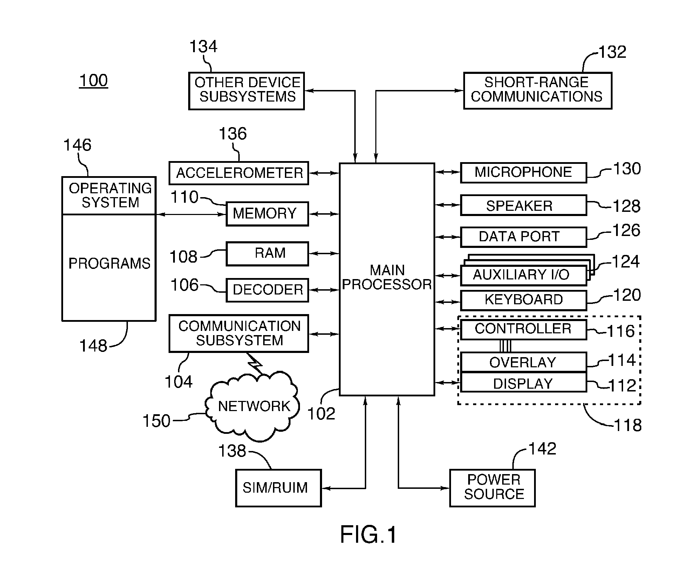

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected or coupled to an electronic controller 116 that together comprise a touch-sensitive display 118, a keyboard 120, an auxiliary input/output (I/O) subsystem 124, a data port 126, a speaker 128, a microphone 130, short-range communications 132, and other device subsystems 134. The processor 102 may optionally interact with one or more actuators (not shown) to provide tactile feedback and one or more force sensors (not shown) to detect a force imparted on the touch-sensitive display 118. Interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

Alternatively, the keyboard 120 may be coupled to a controller to identify characters associated with keys.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display may include a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

The touch-sensitive display 118 may also be configured to detect a gesture. A gesture, such as a swipe, is a type of touch, that begins at an origin point and continues to a finishing point while touch contact is maintained. A swipe may be long or short in distance, or duration, or both distance and duration. Two points of the swipe may be utilized to determine a vector that describes a direction of the swipe. The direction may be referenced with respect to the touch-sensitive display 118, the orientation of the information displayed on the touch-sensitive display 118, or another reference. The origin point and the finishing point of the swipe may be utilized to determine the magnitude or distance of the swipe. The duration of the swipe may be determined from the origin point and finishing point of the swipe in time. The processor 102 receives data from the controller 116 to determine the direction, magnitude, and duration of the swipe.

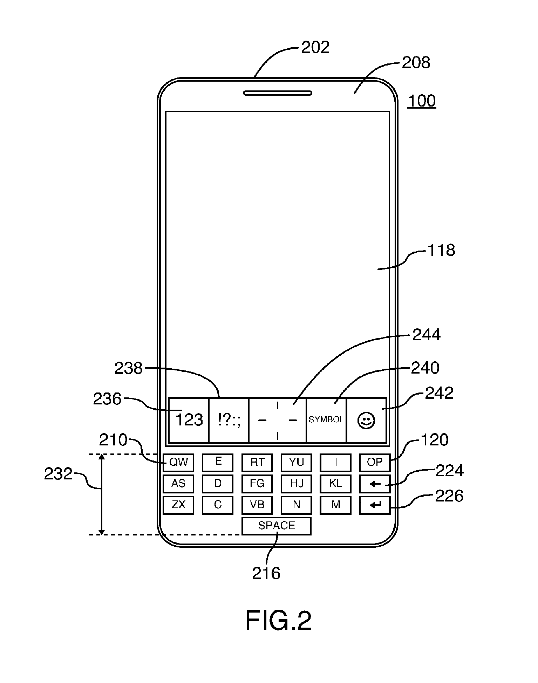

A front view of an example of the portable electronic device 100 is shown in FIG. 2. The portable electronic device 100 includes a body 202 that includes a back, sidewalls, and a front face 208. The touch-sensitive display 118 is disposed in the body 202 and exposed at the front face 208 for user-interaction.

The keyboard 120 may be any suitable physical keyboard with physical keys such as a mechanical keyboard that includes mechanical keys that, when depressed, cause a signal to be sent to the processor 120. Alternatively, the physical keyboard may be a touch-sensitive keyboard that includes touch-sensitive keys which when touched, cause a signal to be sent to the processor 120. The keyboard is also located in the front face 208 of the body 202 and, in the orientation of the portable electronic device 100 shown in the example of FIG. 2, is located under the touch-sensitive display 118. In the present example, the keyboard 120 includes four rows of keys 210. Alternatively, fewer rows of keys may be utilized.

Each of the keys 210 of the keyboard 120 is associated with a function or with at least one of a group of characters that includes alphabetical characters and a space. As illustrated, the keyboard 120 is a reduced keyboard in which individual keys of the keyboard are associated with more than one alphabetical character. The keys of the keyboard 210 are not associated with numerical characters, however. In the example, shown in FIG. 2, the keyboard is in a reduced QWERTY keyboard layout. Other reduced keyboard layouts including AZERTY, QWERTZ, and Dvorak keyboard layouts may be utilized.

In the present example, the keyboard 120 includes 19 keys 210. Ten of the keys 210 are each associated with two respective alphabetical characters and six keys 210 are each associated with a single respective one of the alphabetical characters. In addition to keys 210 associated with the alphabetical characters A through Z, one key 216 is associated with a space function, namely a space key 216 (also known as a spacebar). The remaining two keys 224, 226 are associated with functions, namely a delete key 224 (also known as backspace key), and an enter key 226 (also known as a return key).

By associating each of the keys 210 with an alphabetical character, a space, or keyboard function, the height 232 of the keyboard 120 may be reduced. The height of the keyboard 120 may be reduced as only alphabetical characters, or a keyboard function representation is printed on each of the keys 210. Additional characters such as numerical characters or punctuation marks are not printed on the keys 120 and therefore less space is utilized for the representations. By excluding numerical keys from the keyboard 120, the total height 232 of the keyboard 120 is reduced. The term height 232 is utilized when referring to the keyboard 120 as being the total dimension of the keyboard 120 in the direction illustrated by the reference numeral 232 shown in the portrait orientation of the portable electronic device 100 illustrated in FIG. 2.

The touch-sensitive display 118 is shown in FIG. 2 in the portrait orientation in which the width of the display 118 is less than the height of the touch-sensitive display 118. With the reduced height 232 of the keyboard 120, further space is available to accommodate the touch-sensitive display 118. The touch-sensitive display 118 extends over a majority of the front face 208 of the portable electronic device 100, providing increased display area in comparison to other portable electronic devices with mechanical keyboards.

Information in the form of characters may be entered on the touch-sensitive display 118 in any suitable application such as an electronic mail application, a calendar application, a web browser application, an address book application, or any other suitable application resident on or accessible utilizing the portable electronic device 100. To enter information in the form of characters on the touch-sensitive display 118, keys 210 of the mechanical keyboard 120 are depressed, resulting in a signal received at the processor 102. Characters may also be entered utilizing the touch-sensitive display 118. In the example shown in FIG. 2, options to provide further selectable characters are displayed on the touch-sensitive display 118. The options are displayed as virtual buttons and include, for example, a numerical character option 236, a punctuation option 238, a symbol option 240, and an emoticon option 242. A virtual navigation device 244 is also provided. The virtual navigation device 244 may act as a touchpad for controlling a cursor or other indicator on another portion of the touch-sensitive display 118, for example.

A touch at a location on the touch-sensitive display 118 that is associated with the numerical character option 236 causes display of a virtual keypad including the numerals 0 through 9. A numeral may be selected by a touch on the area associated with the numeral on the touch-sensitive display 118. A touch at a location on the touch-sensitive display 118 that is associated with the punctuation option 238 causes display of a plurality of buttons, each associated with a punctuation mark such as a period, a comma, a semicolon, a colon, and others. A punctuation mark may be selected by a touch on the area associated with the punctuation mark displayed on the touch-sensitive display 118. A touch at a location on the touch-sensitive display 118 that is associated with the symbol option 240 causes display of a plurality of buttons, each associated with a symbol, such as a equal symbol, a plus symbol, or any other suitable symbol. A symbol may be selected by a touch on the area associated with the displayed symbol on the touch-sensitive display 118. A touch at a location on the touch-sensitive display 118 that is associated with the em oticon option 242 causes display of a plurality of buttons, each associated with a respective emoticon. An emoticon may be selected by a touch on the area associated with the emoticon on the touch-sensitive display 118.

Thus, information including alphanumeric characters may be entered or inputted utilizing the keyboard 120 and the touch-sensitive display 118. Alphabetical characters may be entered utilizing keys 210 of the keyboard 120. Numerals, for example, which are excluded from the keyboard 120, may be selected utilizing the touch-sensitive display 118. Similarly, punctuation marks, which are excluded from the keyboard 120, may be selected utilizing the touch-sensitive display 118.

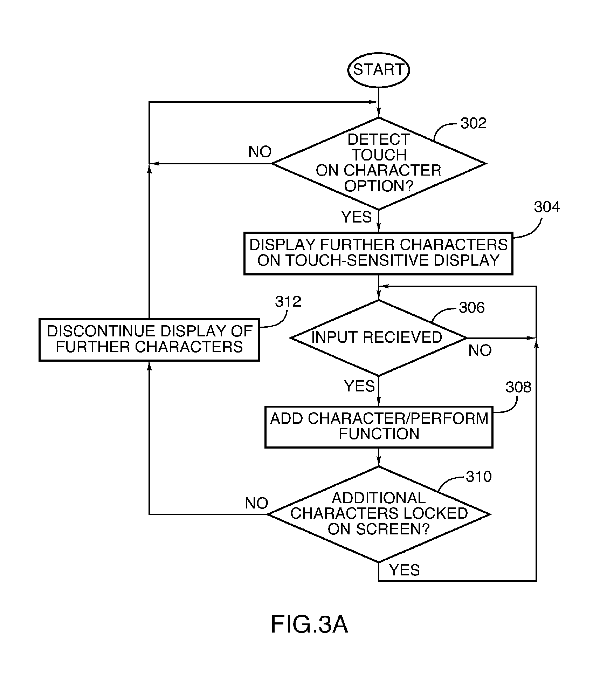

Reference is made to FIG. 3A to describe an example of a method of controlling an electronic device to enter information. The method may be carried out by software executed by, for example, the processor 102. Coding of software for carrying out such a method is within the scope of a person of ordinary skill in the art given the present description. The method may contain additional or fewer processes than shown and described, and may be performed in a different order. Computer-readable code executable by, for example, the processor 102 of the portable electronic device 100 to perform the method, may be stored in a computer-readable medium.

When a touch is detected on a character option on the touch-sensitive display at 302, further associated selectable characters, referred to as further characters, are displayed at 304. The further characters may include characters that are not associated with the keys 210 on the keyboard 120. When an input from either the keyboard 120 or from the touch-sensitive display 118 is received at 306, a function associated with the input is performed or a character associated with the input is entered at 308. The input may be input from one of the keys 210 of the keyboard 120, which keys are associated with a function, a space, or at least one alphabetical character. The input may also be receipt of a touch on the touch-sensitive display 118. The touch may be detected at a location associated with a further character on the touch-sensitive display 118 or at a location associated with a function on the touch-sensitive display 118. When the further characters are locked on the touch-sensitive display at 310, display of the further characters continues and the process continues at 306. When the further characters are not locked on the touch-sensitive display at 310, display of the further characters on the touch-sensitive display is discontinued at 312 and the process continues at 302.

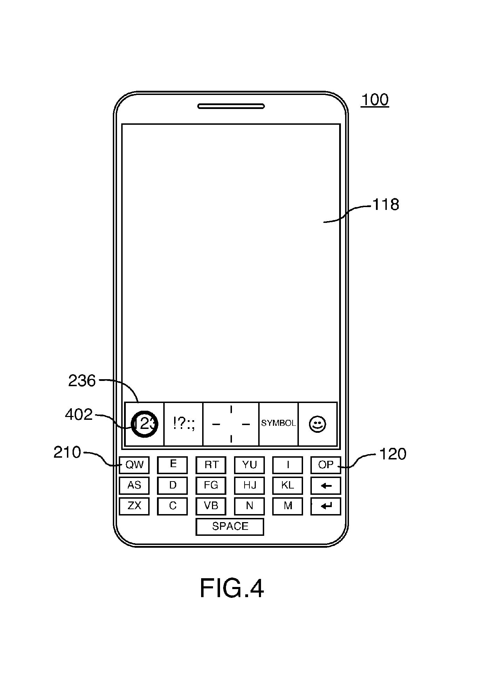

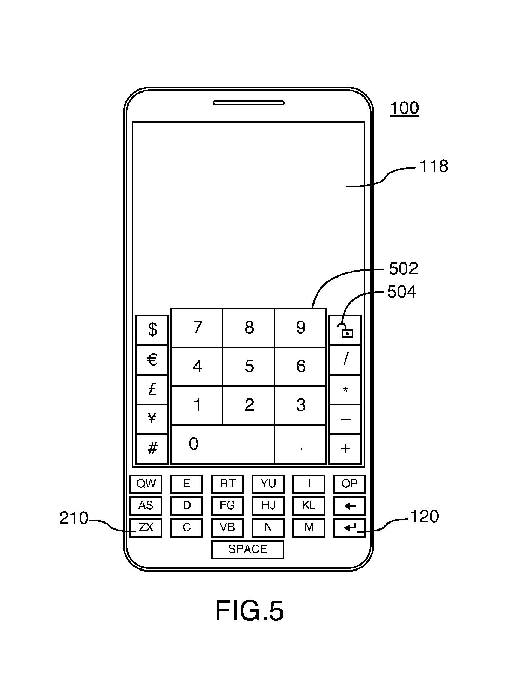

Continued reference is made to FIG. 3A and additionally to FIG. 4 and FIG. 5 which illustrate examples of the portable electronic device of FIG. 2 receiving an input and displaying further characters. For the purpose of the present example, a touch, illustrated by the circle 402, is detected on the numerical character option 236 at 302. The virtual keypad 502, including the numerals 0 through 9 and the decimal symbol, is displayed at 304. Additional virtual keys are provided for entry of, for example, a currency symbol, or a mathematical symbol. In the example illustrated, a lock key 504 is provided to lock the numerals 0 through 9 on the touch-sensitive display 118. When a touch is detected on the lock key 504 at 306, the further characters are locked on the touch-sensitive display 118 at 308 and therefore display of the further characters continues until another touch is received on the lock key 504 to unlock the characters.

When the characters are not locked on the screen, a touch on an area associated with one of the characters displayed, or selection of one of the keys 210 of the keyboard 120 at 306, results in display of an associated character or execution of the associated function at 308, and display of the further characters is discontinued at 31 2.

Thus, characters that are excluded from the keyboard 120 may be selected utilizing virtual keys that are selectively displayed in response to receipt of selection of an option to display the further characters.

Entry of characters utilizing the keys 210 of the keyboard 120 that are associated with more than one alphabetical character may be effected, for example, by comparing candidate character strings to objects, which include words, stored in memory to disambiguate or predict the text being entered. Alternatively, a single tap or depression of a key may cause selection of a first alphabetical character associated with the key while two taps or depressions that occur in succession within a threshold period of time may cause selection of a second alphabetical character associated with the key.

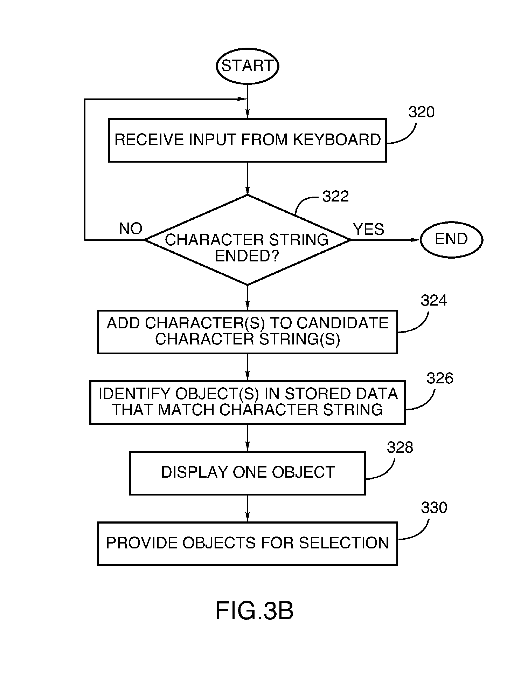

One example of a method of disambiguation and prediction is illustrated in FIG. 3B. The method may be carried out by software executed by, for example, the processor 102. Coding of software for carrying out such a method is within the scope of a person of ordinary skill in the art given the present description. The method may contain additional or fewer processes than shown and described, and may be performed in a different order. Computer-readable code executable by, for example, the processor 102 of the portable electronic device 100 to perform the method, may be stored in a computer-readable medium.

When input is received from the keyboard 120 at 320, a determination is made whether or not the input ends a character string at 322. A space may end a character string and a new character string is started when the next input from a key associated with a character is received. A delete function may remove the previous character or space and return to a previous character string or strings.

Characters associated with the key 210 from which the input is received, are utilized to determine candidate character strings at 324. To determine the candidate character strings, each of the characters associated key are added to the candidate character strings. If no character is in the character string at this time, the characters are each added to start candidate character strings. If other characters are already included in character strings, the characters associated with the key are added. The added characters may increase the number of candidate character strings as all the possible combinations of character strings with associated characters may be added.

The objects that at least partially match the character string are identified at 326 by a comparison of the candidate character strings to the objects in memory. The partial match facilitates matching of character strings that match the beginning of an object stored in memory. The objects that are identified at 326 may be ordered based on, for example, frequency of use and the object that at least partially matches the character string that is utilized most frequently, is displayed 328. Other matching or partially matching objects may optionally be displayed at 330 for selection, for example, when a threshold period of time passes between receipt of input. Thus, the term entered may be disambiguated by displaying the object that matches a completed character string. The object being entered may also be predicted utilizing partial matching in which one of the candidate character strings matches the beginning of an object.

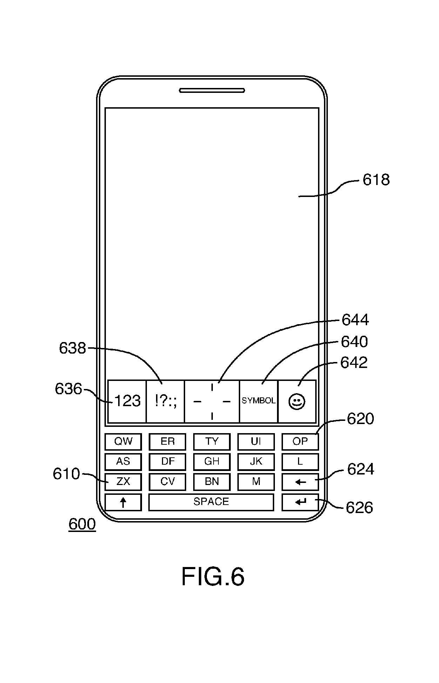

A front view of another example of a portable electronic device 600 is shown in FIG. 6. The portable electronic device 600 of FIG. 6 is similar to the portable electronic device 100 described with reference to FIG 2. Many of the features described with reference to the portable electronic device 600 of FIG. 6 are similar to the features of the portable electronic device of FIG. 2 and similar features may not be described again in detail.

The keyboard 620 may be any suitable physical keyboard such as a mechanical keyboard or a touch-sensitive keyboard. In the present example, the keyboard 120 includes four rows of keys 610.

Again, each of the keys 610 of the keyboard 620 is associated with a function or with at least one of a group of characters that includes alphabetical characters and a space. As illustrated, the keyboard 620 is a reduced keyboard in which some of the individual keys of the keyboard are associated with more than one alphabetical character. The keys of the keyboard 620 are not associated with numerical characters, however. The keys of the keyboard 620 are also not associated with punctuation marks. In the example, shown in FIG. 6, the keyboard is in a reduced QWERTY keyboard layout. Other reduced keyboard layouts including AZERTY, QWERTZ, and Dvorak keyboard layouts may be utilized.

In the present example, the keyboard 620 includes 18 keys 610. Twelve of the keys are each associated two respective alphabetical characters and two keys are each associated with a single respective one of the alphabetical characters. In addition to keys associated with the alphabetical characters A through Z, one key 616 is associated with a space function, namely a space key 616 (also known as a spacebar). The remaining three keys 624, 626, 622 are associated with functions, namely a delete key 624 (also known as a backspace key), and an enter key 626 (also known as a return key), and a shift key 622.

Optionally, physical function keys such as an Alt key or symbol key may be included, for example, adjacent to the space key 616. The Alt key or symbol key may be included to display selectable character options including, for example numerical characters, punctuation, and symbols.

By associating each of the keys 610 with alphabetical characters, a space, or keyboard function, the height of the keyboard 620 may be reduced. The height of the keyboard 620 may be reduced as only alphabetical characters, or a keyboard function representation is printed on each of the keys 610. Additional characters such as numerical characters or punctuation marks are not printed on the keys 610 and therefore less space is utilized for the representations. By excluding numerical keys from the keyboard 620, the total height of the keyboard 620 may be reduced.

The touch-sensitive display 618 is shown in FIG. 6 in the portrait orientation in which the width of the display 618 is less than the height of the display 618. With the reduced height of the keyboard 620 further space is available to accommodate the touch-sensitive display 618. The touch-sensitive display 618 extends over a majority of the front face of the portable electronic device 600, providing increased display area in comparison to other portable electronic devices with mechanical keyboards.

Information in the form of characters may be entered on the touch-sensitive display 618 in any suitable application. To enter information in the form of alphabetical characters or a space, keys of the keyboard may be depressed, resulting in a signal received at the processor. Alternatively, numerical characters or punctuation marks, also referred to herein as characters, may be entered utilizing the touch-sensitive display 618. In the example shown in FIG. 6, options to provide further selectable characters are displayed on the touch-sensitive display 618. The options are displayed as virtual buttons and include, for example, a numerical character option 636, a punctuation option 638, a symbol option 640, and an emoticon option 642. A virtual navigation device 644 is also provided. The virtual navigation device 644 may act as a touchpad for controlling a cursor or other indicator on another portion of the touch-sensitive display 618, for example.

Information, including alphanumeric characters may be entered or inputted utilizing the keyboard 620 and the touch-sensitive display 618. Alphabetical characters may be entered utilizing the keyboard 620. Numerals, punctuation, or other characters which are excluded from the keyboard 620, may be selected utilizing the touch-sensitive display 618.

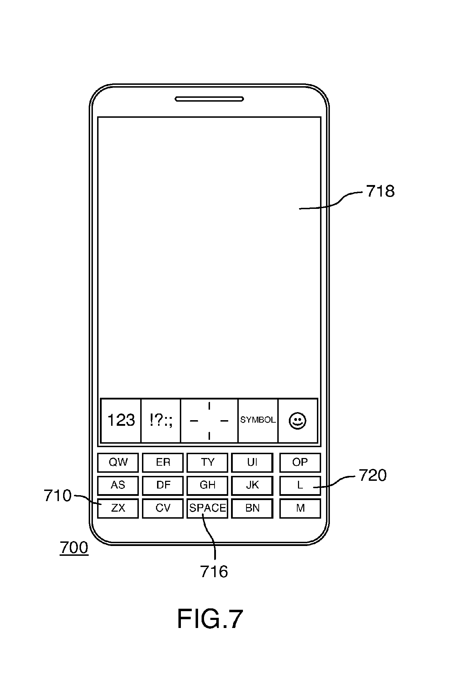

A front view of another example of a portable electronic device 700 is shown in FIG. 7. The portable electronic device 700 of FIG. 7 is similar to the portable electronic device 100 described with reference to FIG 2. Many of the features described with reference to the portable electronic device 700 of FIG. 7 are similar to the features of the portable electronic device of FIG. 2 and similar features may not be described again in detail.

In the present example, the keyboard 720 includes three rows of keys 710. Each of the keys 710 of the keyboard 720 is associated with at least one of a group of characters that includes alphabetical characters and a space. The keyboard 720 does not include any function keys. Again, the keyboard 720 is a reduced keyboard in which individual keys of the keyboard are associated with more than one alphabetical character. The keys 710 of the keyboard 720 are not associated with numerical characters, however. The keys of the keyboard 720 are also not associated with punctuation marks.

In the present example, the keyboard 720 includes 15 keys 710. Twelve of the keys are each associated with two respective alphabetical characters and two keys are each associated with a single respective one of the alphabetical characters. In addition to keys 710 associated with the alphabetical characters A through Z, one key 71 6 is associated with a space (also known as a spacebar).

By excluding numerical keys 710 from the keyboard 720, the total height of the keyboard 720 may also be reduced and further space is available to accommodate the touch-sensitive display 718. The touch-sensitive display 718 extends over a majority of the front face of the portable electronic device 700, providing increased display area in comparison to other portable electronic devices with mechanical keyboards.

To enter information in the form of alphabetical characters or a space, keys 710 of the keyboard 720 may be depressed, resulting in a signal received at the processor. Numerical characters and/or punctuation marks, also referred to herein as characters, may be entered or inputted utilizing the touch-sensitive display 718.

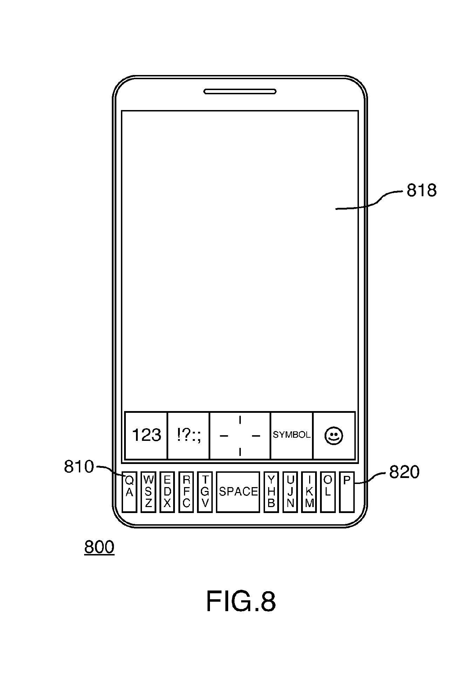

A front view of yet another example of a portable electronic device 800 is shown in FIG. 8. The portable electronic device 800 of FIG. 8 is similar to the portable electronic device 100 described with reference to FIG 2. Many of the features described with reference to the portable electronic device 800 of FIG. 8 are similar to the features of the portable electronic device of FIG. 2 and similar features may not be described again in detail.

In the present example, the keyboard 820 includes a single row of 11 keys 810. Each of the keys 810 of the keyboard 820 is associated with at least one of a group of characters that includes alphabetical characters and a space. The keyboard 820 does not include any function keys. Again, the keyboard 820 is a reduced keyboard in which individual keys of the keyboard are associated with more than one alphabetical character. The keys of the keyboard 820 are not associated with numerical characters, however. The keys of the keyboard 820 are also not associated with punctuation marks or with functions.

In the present example, the keyboard 820 includes seven keys 810 that are each associated three alphabetical characters, two keys 810 that are each associated with two alphabetical characters, and one key 810 that is associated with a single one of the alphabetical characters. In addition to keys 81 0 associated with the alphabetical characters A through Z, one key 816 is associated with a space (also known as a spacebar).

By excluding numerical keys from the keyboard 820, the total height of the keyboard 820 may be reduced and further space is available to accommodate the touch-sensitive display 818. The touch-sensitive display 818 extends over a majority of the front face of the portable electronic device 800, providing increased display area in comparison to other portable electronic devices with mechanical keyboards.

To enter information in the form of alphabetical characters or a space, keys of the keyboard may be depressed, resulting in a signal received at the processor. Numerical characters or punctuation marks, also referred to herein as characters, may be entered or inputted utilizing the touch-sensitive display 818.

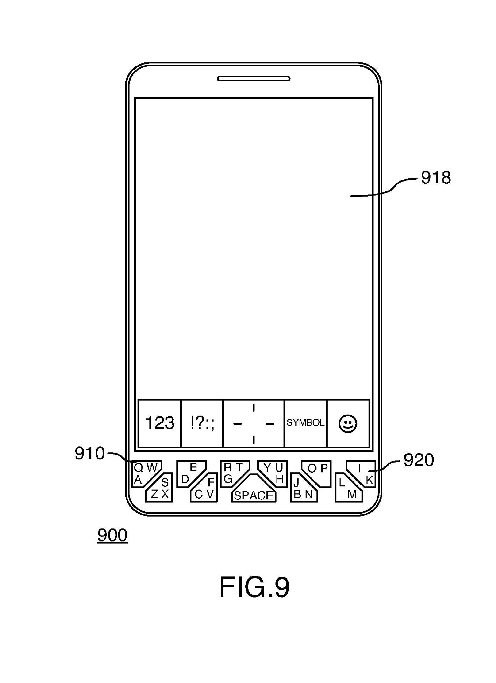

A front view of yet another example of a portable electronic device 900 is shown in FIG. 9. The portable electronic device 900 of FIG. 9 is similar to the portable electronic device 100 described with reference to FIG 2. Many of the features described with reference to the portable electronic device 900 of FIG. 9 are similar to the features of the portable electronic device 100 of FIG. 2 and similar features may not be described again in detail.

In the present example, the keyboard 920 includes 11 keys 910 that are not illustrated as squares. Instead, the keys 910 are illustrated as other polygons. Each of the keys 910 of the keyboard 920 is associated with at least one of a group of characters that includes alphabetical characters and a space. The keyboard 920 does not include any function keys. Again, the keyboard 920 is a reduced keyboard in which individual keys of the keyboard 920 are associated with more than one alphabetical character. The keys 910 of the keyboard 920 are not associated with numerical characters, however. The keys 920 of the keyboard 920 are also not associated with punctuation marks.

In the present example, the keyboard 920 includes six keys 910 that are each associated three alphabetical characters, and four keys 910 that are each associated with two alphabetical characters. In addition to keys associated with the alphabetical characters A through Z, one key 916 is associated with a space.

With reduced key height and by excluding numerical keys from the keyboard, the total height of the keyboard 920 may also be reduced and further space is available to accommodate the touch-sensitive display 918. The touch-sensitive display 918 extends over a majority of the front face of the portable electronic device 900, providing increased display area in comparison to other portable electronic devices with mechanical keyboards.

To enter information in the form of alphabetical characters or a space, keys of the keyboard may be depressed, resulting in a signal received at the processor. Numerical characters or punctuation marks, also referred to herein as characters, may be entered or inputted utilizing the touch-sensitive display 918.

The operation of the example portable electronic devices 600, 700, 800, and 900 is similar to the operation of the example portable electronic device 100 described above with reference to FIG. 2 through FIG. 6.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A portable electronic device comprising:
a body having a front face;
a touch-sensitive display exposed at the front face of the body;
a keyboard at the front face and having keys associated with a first plurality of characters excluding numerical characters, such that keys of the keyboard are associated with a respective one of a function and at least two alphabetical characters;
a memory; and
a processor coupled to the touch-sensitive display, the keyboard, and the memory to display a second plurality of characters in response to receipt of an input to display the second plurality of characters, wherein the second plurality of characters are selectable utilizing the touch-sensitive display.

2. The portable electronic device of claim 1, wherein the keyboard includes function keys each associated with a respective single function.

3. The portable electronic device according to claim 1 or 2, wherein the input comprises detection of a touch at a location associated with a feature on the touch-sensitive display.

4. The portable electronic device according to any of claims 1 to 3, wherein an option to display the second plurality of characters is provided via the touch-sensitive display.

5. The portable electronic device according to claim 4, wherein the second plurality of characters comprises numerical characters.

6. The portable electronic device according to any of claims 1 to 5, wherein options to provide the second plurality of characters are displayed on the touch-sensitive display.

7. The portable electronic device according to claim 6, wherein the options include a numerical character option and a punctuation option.

8. The portable electronic device according to claim 7, wherein the options include a symbol option.

9. The portable electronic device according to claim 7 or 8, wherein the options include an emoticon option.

10. The portable electronic device according to any of claims 1 to 9, wherein a navigation device is rendered on the touch-sensitive display.

11. The portable electronic device according to any of claims 1 to 10, wherein the first plurality of characters includes punctuation marks.

12. The portable electronic device according to any of claims 1 to 11, wherein the touch-sensitive display covers a majority of the area of the front face.

13. The portable electronic device according to any of claims 1 to 12, wherein the keyboard comprises three or fewer rows of keys.

14. The portable electronic device according to any of claims 1 to 13, wherein disambiguation is utilized to determine ones of the first plurality of characters entered utilizing the keyboard.

15. The portable electronic device according to any of claims 1 to 14, wherein text prediction is utilized to predict words during entry of ones of the first plurality of characters utilizing the keyboard.

## Amended claims

### Amended claims in accordance with Rule 137(2) EPC.

**1.** A portable electronic device (100) comprising:
a body (202) having a front face (208);
a touch-sensitive display (118) exposed at the front face (208) of the body (202);
a physical keyboard (120) at the front face (208) and having keys (210) associated with a first plurality of characters excluding numerical characters, such that keys (210) of the physical keyboard (120) are associated with a respective one of a function and at least two alphabetical characters;
a memory (108, 110); and
a processor (102) coupled to the physical keyboard (120) and coupled to the touch-sensitive display (118) and the memory (108, 110), to execute a program stored in the memory (108,110) to cause the portable electronic device (100) to display a second plurality of characters on the touch-sensitive display (118) in response to receipt of an input to display the second plurality of characters, wherein the second plurality of characters are selectable utilizing the touch-sensitive display (118).

**2.** The portable electronic device (100) of claim 1, wherein the physical keyboard (120) includes function keys each associated with a respective single function.

**3.** The portable electronic device (100) according to claim 1 or 2, wherein the input comprises detection of a touch at a location associated with a feature on the touch-sensitive display (118).

**4.** The portable electronic device (100) according to any of claims 1 to 3, wherein an option to display the second plurality of characters is provided via the touch-sensitive display (118).

**5.** The portable electronic device (100) according to claim 4, wherein the second plurality of characters comprises numerical characters.

**6.** The portable electronic device (100) according to any of claims 1 to 5, wherein options to provide the second plurality of characters and a third plurality of characters are displayed on the touch-sensitive display (118).

**7.** The portable electronic device (100) according to claim 6, wherein the options include a numerical character option (236) and a punctuation option (238).

**8.** The portable electronic device (100) according to claim 7, wherein the options include a symbol option (240).

**9.** The portable electronic device (100) according to claim 7 or 8, wherein the options include an emoticon option (242).

**10.** The portable electronic device (100) according to any of claims 1 to 9, wherein a navigation device (244) is rendered on the touch-sensitive display (118).

**11.** The portable electronic device (100) according to any of claims 1 to 10, wherein the first plurality of characters includes punctuation marks.

**12.** The portable electronic device (100) according to any of claims 1 to 11, wherein the touch-sensitive display (118) covers a majority of the area of the front face (208).

**13.** The portable electronic device (100) according to any of claims 1 to 12, wherein the physical keyboard (120) comprises three or fewer rows of keys (210).

**14.** The portable electronic device (100) according to any of claims 1 to 13, wherein disambiguation is utilized to determine ones of the first plurality of characters entered utilizing the keyboard (120).

**15.** The portable electronic device (100) according to any of claims 1 to 14, wherein text prediction is utilized to predict words during entry of ones of the first plurality of characters utilizing the keyboard (120).
